# EUROPÄISCHE PATENTSCHRIFT

(11) **EP 2 564 977 B1**
(45) Veröffentlichungstag und Bekanntmachung des Hinweises auf die Patenterteilung: **22.08.2018**
(21) Anmeldenummer: 12163144.4
(22) Anmeldetag: 04.04.2012
(51) Int. Cl.: B23K 26/14

(54) **Laserbearbeitungsgerät**
Laser processing device
Appareil de traitement laser

(30) Priorität: 30.08.2011 DE 202011051153 U
(43) Veröffentlichungstag der Anmeldung: 06.03.2013
(73) Patentinhaber: mobil-mark GmbH, 89075 Ulm (DE)
(72) Erfinder: Baeger, Holm, 89134 Blaustein (DE)
(74) Vertreter: Baur & Weber Patentanwälte PartG mbB

(56) Entgegenhaltungen:
- DE-A1- 3 008 176
- DE-A1-102006 047 794
- DE-C2- 10 059 246

## Beschreibung

Die Erfindung betrifft ein Laserbearbeitungsgerät zur Bearbeitung von Werkzeugoberflächen.

Ein Laserbearbeitungsgerät zur Bearbeitung von Werkstückoberflächen, insbesondere zur Erzeugung von Beschriftungen auf Werkstückoberflächen ist z. B. aus der DE 10 059 246 C2 bekannt. In einem im Betrieb handführbaren Gerätekopf ist ein optisches System zur Fokussierung eines Laserstrahls auf der Werkstückoberfläche und zur zweidimensionalen Schwenkung des Laserstrahls quer zur Strahlachse untergebracht. Das optische System kann insbesondere eine Fokussierlinse und eine Schwenkspiegelanordnung enthalten.

Der aus dem optischen System austretende Laserstrahl ist von einer Abdichthaube umgeben, welche mit einer dem Gerätekopf abgewandten Anlagekante für den Bearbeitungsvorgang an die Werkstückoberfläche angelegt und gegen das Werkstück gedrückt wird. Dabei dichtet eine umlaufende gummielastische Dichtung den Innenraum der Abdichthaube gegen das Austreten von Laserlicht und gegen das Austreten von bei der Bearbeitung anfallenden Abgasen und Partikeln ab. Der Innenraum der Glocke wird vorteilhafterweise mittels einer Gasabführeinrichtung mit Gas, welches auch Umgebungsluft sein kann, durchspült, um die genannten Abgase und Partikel unschädlich für den Benutzer abzuführen. Bei der Anlagekante sind zusätzlich mehrere Schalter einer Sicherheitsschaltereinrichtung angeordnet, welche durch ordnungsgemäßes Andrükken der Anlagekante der Abdichthaube an die Werkstückoberfläche betätigt werden und gewährleisten, dass der Innenraum der Abdichthaube auf Werkstückseite korrekt abgedichtet ist und dass ein richtiger Abstand der Werkstückoberfläche von dem optischen System eingestellt ist.

Ein solches Laserbearbeitungsgerät kann für unterschiedliche Werkstücke z. B. nach Geometrie oder Ausrichtung verschiedene Abdichthauben erfordern.

Der vorliegenden Erfindung liegt die Aufgabe zugrunde, ein für die Verwendung verschiedener Abdichthauben verbessertes Laserbearbeitungsgerät der gattungsgemäßen Art anzugeben.

Die Erfindung ist im unabhängigen Anspruch beschrieben. Die abhängigen Ansprüche enthalten vorteilhafte Ausgestaltungen und Weiterbildungen der Erfindung.

Durch die Anordnung der Sicherheitsschaltereinrichtung und eines Teils der Gasabführeinrichtung in einer Verbindungseinheit zwischen der Abdichthaube und den das optische System enthaltenden Gerätekopf kann vorteilhafterweise die Abdichthaube selbst konstruktiv einfach gehalten sein, was bei einem System mit mehreren auswechselbaren Abdichthauben zu besonderen Kostenvorteilen und zu einer vereinfachten Handhabung beim Wechsel von Abdichthauben führt. Insbesondere sind an den verschiedenen Abdichthauben keine eigenen Sicherheitsschalter und beim Wechsel kein Lösen und Herstellen elektrischer Verbindungen erforderlich.

Vorteilhafterweise ist die Abdichthaube werkzeuglos manuell von der Verbindungseinheit lösbar und an dieser befestigbar. Die Verbindung zwischen Abdichthaube und Verbindungseinheit kann insbesondere Rastverbindungen mit rastend ineinander greifenden Rastelemente und Vertiefungen oder Vorsprüngen enthalten.

Die mechanische Schnittstelle zwischen Abdichthaube und Verbindungseinheit ist vorzugsweise in axialer Richtung, worunter eine zur mittleren Strahlrichtung des Laserstrahls durch die Abdichthaube parallele Richtung, nachfolgend auch als Strahlachse bezeichnet, verstanden sei, im Befestigungszustand unveränderlich, d. h. ohne axiale Relativverschiebbarkeit zwischen Abdichthaube und Verbindungseinheit. In vorteilhafter Ausführung kann aber eine Verdrehbarkeit der Abdichthaube relativ zur Verbindungseinheit um die axiale Richtung gegeben sein, wodurch die Handhabung des Geräts bei unterschiedlich zugänglichen Oberflächenbereichen von Werkstücken vereinfacht wird. Vorzugsweise ist die Verdrehbarkeit durch Winkelanschläge begrenzt, insbesondere mit zwei um 90° gegeneinander verdrehten Endstellungen. Unterschiedliche Winkelstellungen der Verdrehung der Abdichthaube gegen die Verbindungseinheit können vorteilhaft durch verschiedene Steuerprogramme bei der Ansteuerung einer Schwenkspiegelanordnung des optischen Systems berücksichtigt werden.

In bevorzugter Ausführung ist die Verbindungseinheit in zwei axial relativ zueinander entgegen einer Rückstellkraft verlagerbare Abschnitte unterteilt, wobei durch eine solche Relativverlagerung entgegen der Rückstellkraft vorteilhafterweise eine zwischen den beiden Abschnitten angeordnete Sicherheitsschaltereinrichtung betätigbar ist. Ein dem Gerätekopf zugewandter erster Abschnitt und ein dem Gerätekopf abgewandter und die Abdichthaube tragender zweiter Abschnitt sind vorteilhafterweise über ein flexibles Element miteinander verbunden, welches vorteilhafterweise eine bezüglich der mittleren Strahlachse des durch die Verbindungseinheit führenden Laserstrahls radiale seitliche Abdichtung des an dem Innenraum der Abdichthaube anschließenden Innenraum der Verbindungseinheit bewirkt. In vorteilhafter Ausführung kann das flexible Element zugleich ein die Rückstellkraft der axialen Verschiebbarkeit zwischen ersten und zweitem Abschnitt bewirkendes Federelement bilden. Insbesondere kann in bevorzugter Ausführung vorgesehen sein, ersten und zweiten Abschnitt und flexibles Element als einen einheitlichen Verbindungskörper, z. B. in einem 3-D-Materialdruckverfahren herzustellen.

Die Gasführungseinrichtung ist bei der axial in zwei Abschnitte unterteilten Verbindungseinheit vorteilhafterweise in dem dem Gerätekopf zugewandten ersten Abschnitt ausgebildet und kann insbesondere ein oder mehrere, dem von der Verbindungseinheit umgebenen Raum zuweisende Gasaustrittsöffnungen aufweisen, welche in vorzugsweise in axialer Richtung verlaufende Kanäle zum Gerätekopf übergehen. Die abgeführten Gase und in diesen enthaltene Partikel werden vorteilhafterweise in einer geschlossenen Schlauchleitung einer Filteranordnung zugeleitet.

Vorteilhafterweise wird dem von Abdichthaube und Verbindungseinheit umgebenen Raum ein sauberes Gas, welches auch gegebenenfalls gereinigte Umgebungsluft sein kann, über den Gerätekopf zugeführt und kann dort insbesondere auch eine Kühlfunktion zur Aufnahme von Verlustwärme erfüllen. In bevorzugter Ausführung ist das zugeführte Gas über eine Düse in den von der Verbindungseinheit und der Abdichthaube umgebenen Raum eingeleitet, wobei die Düse den Gasstrom auf die dem umgebenen Raum bzw. dem Werkstück zugewandte Oberfläche des optischen Systems richtet und hierdurch ein Vordringen von bei der Werkstückbearbeitung entstehenden Partikel und Abgasen, welche zu einer Verschmutzung der Oberfläche des optischen Systems führen können, weitgehend verhindert. Die Gasaustrittsöffnungen der Gasabführungseinrichtung sind vorteilhafterweise in axialer Richtung von der Düse in Richtung des Werkstücks beabstandet angeordnet.

Ein dem Werkstück zuweisender Teil des im Gerätekopf angeordneten optischen Systems, insbesondere eine Fokussierlinse ist vorteilhafterweise durch die Funktionseinheit hindurch aus dem Gerätekopf entnehmbar bzw. in diesen einsetzbar. Die Verbindungseinheit ist vorteilhafterweise um ein geringes Maß relativ zu dem optischen System in axialer Richtung verstellbar, wodurch ohne Eingriff in das optische System selbst eine Nachjustierung der Fokuslänge der Vorrichtung möglich ist.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Schnitt durch eine bevorzugte Ausführungsform,
- Fig. 2: eine andere Ausführung einer Abdichthaube,
- Fig. 3: eine Bajonettbefestigung,
- Fig. 4: eine Anordnung mit anderer Abdichthaube und Befestigung.

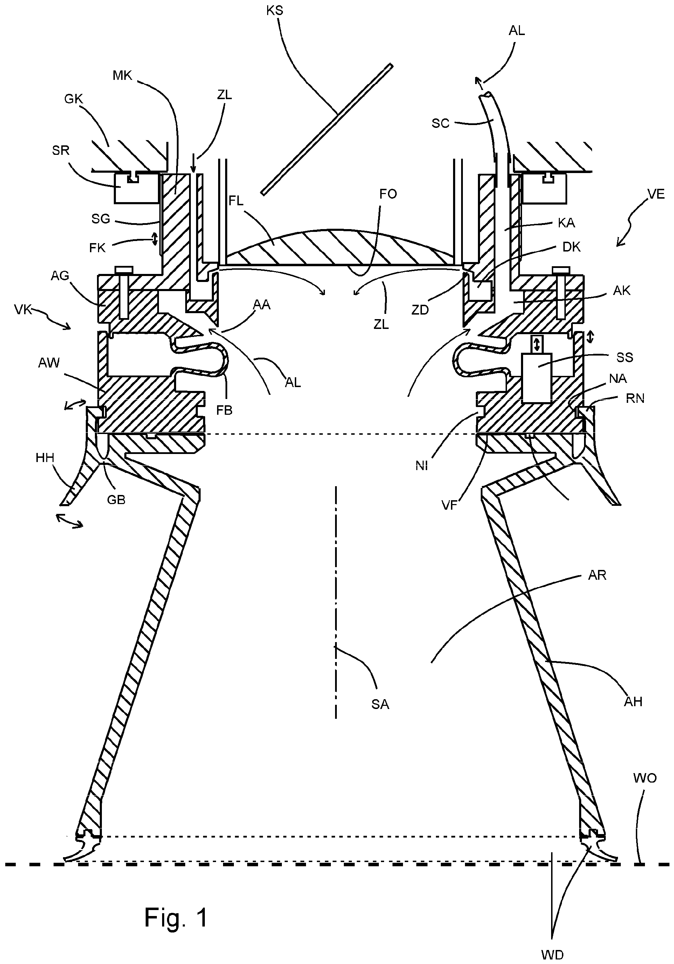

Fig. 1 zeigt in einer Schnittansicht mit einer die mittlere Strahlrichtung SA enthaltenden Schnittebene für die Erläuterung der Erfindung wesentliche Komponenten eines erfindungsgemäßen Laserbearbeitungsgeräts. Dabei ist ein Gerätekopf GK, welcher insbesondere laseraktive Elemente, Steuerungselektronik, Bedienelemente und dergleichen enthalten kann, lediglich angedeutet. In dem Gerätekopf GK ist auch vorteilhafterweise lösbar ein optisches System vorgesehen, von welchem in Fig. 1 ein gesteuert kippbarer Kippspiegel KS zur Strahlumlenkung und eine Fokussierlinse FL zum Fokussieren eines Laserstrahls auf eine Werkstückoberfläche WO enthalten kann. Lasergeräte mit einem Gerätekopf mit den geschilderten Komponenten sind an sich aus dem Stand der Technik bekannt.

Der durch den Laserstrahl zu bearbeitende Flächenbereich der Werkstückoberfläche WO ist im Betrieb des Geräts durch eine Abdichthaube AH seitlich abgeschlossen. An der der Werkstückoberfläche WO zuweisenden Anlagekante der Abdichthaube AH kann vorteilhafterweise eine weichelastische umlaufende Ringdichtung WD vorgesehen sein. Die Abdichthaube AH umgibt einen Arbeitsraum AR zwischen der Werkstückoberfläche WO und dem optischen System im Gerätekopf. Zwischen dem Gerätekopf und die Abdichthaube AH ist axial eine Verbindungseinheit VE eingefügt, welche einen in Fortsetzung des Arbeitsraums AR zum optischen System im Gerätekopf hin folgenden Innenraum VR umgibt. Die Verbindungseinheit VE enthält im skizzierten bevorzugten Beispiel einen an einem Montagekörper MK befestigten Verbindungskörper VK.

Beim Betrieb eines solchen Laserbearbeitungsgeräts sollen weder Strahlung noch bei der Bearbeitung entstehende Gase oder Feinpartikel aus dem umschlossenen Raum AR bzw. dem Innenraum VR austreten, wofür der Arbeitsraum AR an der der Werkstückoberfläche WO zuweisenden Anlagekante den Arbeitsraum AR hinreichend dicht abschließen soll. Ferner soll die Emission von Laserstrahlung automatisch verhindert sein, wenn die Abgeschlossenheit des Arbeitsraumes AR nicht gewährleistet ist. Als Sicherheitsmaßnahmen für die Einhaltung dieser Betriebsbedingungen sind insbesondere Drucksensoren, welche eine Druckdifferenz zwischen dem Innenraum AR, VR einerseits und der Umgebungsluft detektieren und auswerten sowie Sicherheitsschalter bekannt, welche durch Andrücken der Abdichthaube AH auf die Werkstückoberfläche betätigbar sind.

Gemäß einem Aspekt der Erfindung ist die Abdichthaube AH lösbar an der Verbindungseinheit VE befestigt, wobei Befestigen und Lösen der Abdichthaube AH an der Verbindungseinheit VE vorteilhafterweise manuell werkzeuglos erfolgen können. Im skizzierten Beispiel weist hierfür die Verbindungseinheit VE an ihrem der mittleren Strahlrichtung SA abgewandten Außenumfang Rastvertiefungen NA auf, in welche Rastnocken RN der Abdichthaube AH lösbar eingreifen können. Die Rastnocken RN sind in dem skizzierten Beispiel manuell aus den Vertiefungen NA lösbar, indem die Rastnocken RN über Gelenkbereiche GB der Abdichthaube AH an dieser schwenkbar gehalten sind und durch Fingerdruck eines Benutzers auf Hebelverlängerungen HH unter elastischer Verformung der Gelenkbereiche GB aus der in Fig. 1 dargestellten Befestigungsposition seitlich ausschwenkbar sind. Bei ausgeschwenkten Rastnocken RN können Verbindungseinheit VE und Abdichthaube AH in Richtung der Strahlachse SA voneinander gelöst bzw. zusammengefügt werden. An den im befestigten Zustand der Abdichthaube AH aneinander liegenden Kontaktflächen VF zwischen Abdichthaube AH und Verbindungseinheit VE können vorteilhafterweise Dichtungsstrukturen DS vorgesehen sein, welche auf an sich bekannte Weise, insbesondere in Form von weichelastischen, die Strahlachse SA durchgehend umgebenden Ringdichtungen oder auch durch ineinander greifende, Labyrinthdichtungen bildende Dichtungsstrukturen ausgeführt sein können.

Ein Sicherheitsschaltereinrichtung ist auf Seiten der Verbindungseinheit VE ausgebildet, wofür im bevorzugten Ausführungsbeispiel der Verbindungskörper VK der Verbindungseinheit VE axial bezüglich der Strahlachse SA in einen ersten, dem Gerätekopf GK zugewandten Abschnitt AK und einen zweiten, dem Gerätekopf GK abgewandten und der Abdichthaube zugewandten Abschnitt AW unterteilt ist. Die Abdichthaube AH ist an dem zweiten Abschnitt AW befestigt. Die beiden Abschnitte AK und AW sind in Richtung der Strahlachse SA relativ zueinander verlagerbar, wobei die Verlagerung vorteilhafterweise entgegen einer Rückstellkraft, insbesondere einer Federkraft erfolgt. Die in Fig. 1 dargestellte Relativposition zwischen erstem Abschnitt AK und zweitem Abschnitt AW sei die Ruheposition, welche die Verbindungseinheit VE unter der Einwirkung der Rückstellkraft einnimmt. Die durch einen Schalter SS repräsentierte Sicherheitsschaltereinrichtung, welche vorteilhafterweise wenigstens zwei, insbesondere wenigstens drei über den Umfang um die Strahlachse verteilte Schalter aufweist, ist in dieser Ruheposition der Verbindungseinheit VE, in welcher noch keine die Abdichthaube AH gegen die Werkstückoberfläche WO drückende Kraft auf den Gerätekopf einwirkt, in einer ersten Schaltstellung, welche die Abgabe von Laserstrahlung aus dem Gerätekopf sperrt.

Bei Einwirken einer Andrückkraft zwischen Gerätekopf und Werkstückoberfläche WO werden die beiden Abschnitte AK und AW entgegen einer Rückstellkraft axial aufeinander zu bewegt und die Schalter SS der Sicherheitsschaltereinrichtung werden in einen zweite Schaltstellung versetzt, welcher signalisiert, dass die Abdichthaube AH, korrekt, d. h. insbesondere mit ausreichender Kraft und ohne Verkippen, auf die Werkstückoberfläche aufgedrückt ist. In dieser Schaltstellung der Sicherheitsschaltereinrichtung ist die Abgabe von Laserstrahlung aus dem Gerätekopf GK in Richtung der Werkstückoberfläche WO frei gegeben und der Bearbeitungsvorgang, welcher insbesondere die Beschriftung der Werkstückoberfläche WO durch Erzeugen eines für die Steuerung des optischen Systems vorgebbaren Musters auf der Oberfläche sein kann, kann durchgeführt werden. Wenn die Andrückkraft zwischen Gerätekopf GK und Werkstück nachläßt, werden die beiden Abschnitte AK und AW der Verbindungseinrichtung VE durch die Rückstellkraft automatisch wieder axial voneinander weg gedrückt und die Sicherheitsschaltereinrichtung geht in die erste Schaltstellung über und bewirkt eine Sperrung der Abgabe von Laserstrahlung in den Arbeitsraum AR.

Durch die Anordnung der Sicherheitsschaltereinrichtung auf Seiten der Verbindungseinrichtung VE kann vorteilhafterweise die Abdichthaube AH besonders einfach gestaltet sein, was vor allem von wirtschaftlicher Bedeutung ist, wenn mehrere unterschiedliche Abdichthauben AH für unterschiedliche Bearbeitungsvorgänge auswechselbar vorgesehen sind. Bei Austausch von Abdichthauben AH sind ferner vorteilhafterweise keine elektrischen Verbindungen zwischen der Sicherheitsschaltereinrichtung und der Elektronik im Gerätekopf zu lösen und neu herzustellen, so dass Bedienungsfehler beim Austausch von Abdichthauben AH weitgehend vermieden sind.

Die beiden Abschnitte AK und AW der Verbindungseinrichtung VE sind in dargestellter, bevorzugter Ausführung Teile eines einheitlichen Verbindungskörpers und untereinander über einen Federbalg FB miteinander verbunden. Der Verbindungskörper kann insbesondere in bevorzugter Ausführung durch ein dreidimensionales Aufbauverfahren, insbesondere auch bekannt unter den Bezeichnungen 3-D-Drucken oder Rapid Prototyping hergestellt werden, wodurch auch komplexe Strukturen und die materialhomogene Ausführung der beiden Abschnitte AK und AW mit dem Federbalg FB möglich sind. Durch die Vereinigung der beiden Abschnitte AK und AW und deren Verbindung über den Federbalg FB in einem einheitlichen Verbindungskörper kann auf besonders vorteilhafte Weise eine Abdichtung des Innenraums VR gegen das Austreten von Gasen im Betrieb der Vorrichtung erfolgen.

In der Verbindungseinheit VE, insbesondere in deren dem Gerätekopf GK zugewandten ersten Abschnitt AK sind vorteilhafterweise zusätzlich gasleitende Strukturen einer Gasabführeinrichtung vorgesehen, über welche Gas aus dem im Betrieb abgeschlossenen Innenraum um die Strahlachse SA abgeführt und hierdurch insbesondere bei der Bearbeitung der Werkstückoberfläche WO durch den Laserstrahl entstehende Gasanteile und im Gasstrom transportierbare Partikel kontrolliert abgeführt werden. Insbesondere können Gasaustrittsöffnungen AA in dem ersten Abschnitt AK der Verbindungseinrichtung VE vorgesehen sein, welche über einen Kanal KA zu einer Leitung SC, insbesondere einer Schlauchleitung im Gerätekopf führen. Über die Leitung SC kann ein Abgasstrom AL günstigerweise zu einer Filteranordnung geführt und in dieser von schädlichen Gasanteilen und Partikeln gereinigt werden.

Vorteilhafterweise herrscht beim Betrieb des Laserbearbeitungsgeräts im Innenraum ein geringer Überdruck, wofür in den Innenraum ein von Verunreinigungen freies Gas eingeleitet ist. Die Einleitung eines Zuluftstroms ZL erfolgt vorteilhafterweise über eine Düsenanordnung ZD, welche vorteilhafterweise gleichfalls in der Verbindungseinrichtung VE ausgebildet ist. Die Düsenanordnung ZD ist vorteilhafterweise so gestaltet und bezüglich einer dem Innenraum bzw. der Werkstückoberfläche WO zuweisenden Fläche FO des optischen Systems, im skizzierten Beispielsfall gebildet durch eine Fläche der Fokussierlinse FL, so angeordnet, dass der von Verunreinigungen freie Zuluftstrom beim Austritt aus der Düsenanordnung ZD in den Innenraum anfänglich auf die Oberfläche FO zu gerichtet ist. Hierdurch entsteht an der Oberfläche FO des optischen Systems ein Polster aus von Verunreinigungen freiem Gas, so dass eine Verschmutzung der Oberfläche FO durch während des Bearbeitungsvorgangs entstehende Gase und Partikel vermieden wird. Die Düsenanordnung ZD ist im skizzierten Beispiel durch axial gegenüber stehende Flächen des Montagekörpers MK und des Abschnitts AW des Verbindungskörpers VK gebildet, kann aber auch ausschließlich in dem ersten Abschnitt AW oder dem Montagekörper MK ausgebildet sein. Die Düsenanordnung kann auch ganz oder teilweise in dem Grundkörper GK des Gerätegehäuses ausgebildet sein.

Die Gasaustrittsöffnung AA ist axial gegenüber der Düsenanordnung ZD von dem optischen System weg in Richtung der Werkstückoberfläche WO versetzt angeordnet, so dass der im Innenraum zirkulierende Gasstrom nach Aufnahme von bei der Oberflächenbearbeitung entstehenden Gasen und/oder Partikeln von der Oberfläche FO beabstandet aus dem Innenraum abgeführt wird.

Die Gasaustrittsöffnung AA ist vorteilhafterweise durch einen ununterbrochen um die Strahlachse SA umlaufende Öffnungsschlitz gebildet, kann aber auch durch in Umfangsrichtung aufeinander folgende mehrere Teilöffnungen gegeben sein. Innerhalb des Grundkörpers GK oder vorzugsweise der Verbindungseinrichtung VE können zwischen den zur Strahlachse SA im wesentlichen parallelen zuführenden und abführenden Kanälen und den dem Innenraum zuweisenden Öffnungen ringförmige Verteilerräume DK, AK mit erweitertem Querschnitt ausgebildet sein.

Der dem Gerätekopf GK zugewandte erste Abschnitt AG des Verbindungskörpers kann unmittelbar mit dem Gerätekopf verbunden sein. In der dargestellten bevorzugten Ausführungsform enthält die Verbindungseinrichtung VE zusätzlich noch einen Montagekörper MK, an dessen dem Gerätekopf GK abgewandtem Ende der erste Abschnitt AG des Verbindungskörpers befestigt ist. Der Montagekörper MK kann vorteilhafterweise dazu vorgesehen sein, über ein Gewinde SG, welches mit einem axial in definierter Position am Gerätekopf GK angeordneten Drehring SR in Eingriff steht, durch Drehen des Drehrings SR um ein geringes Maß FK axial verschiebbar am Gerätekopf gehalten zu sein. Durch diese axiale Verschiebbarkeit FK kann vorteilhafterweise eine Feinkorrektur des Strahlfokus ohne Eingriff in die Geräteoptik erfolgen. Der Drehring SR ist relativ zum Gerätekopf GK um die Strahlachse drehbar. Der Montagekörper MK sei durch in Fig. 1 nicht dargestellte Strukturen unverdrehbar relativ zum Gerätekopf GK gehalten. Eine Drehung des Drehrings SR um die Strahlachse bewirkt dann über die Gewindeverbindung SG die geringe axiale Verschiebung FK des Montagekörpers MK relativ zum Gerätekopf GK, was sich wiederum auf die axiale Distanz zwischen dem optischen System und der Werkstückoberfläche bei auf die Werkstückoberfläche aufgedrückter Abdichthaube AH auswirkt. Zur Strahlachse SA im wesentlichen parallele Kanäle für Zuluft ZL und Abluft AL durch den Montagekörper MK sind Bestandteile des Gasführungssystems.

Die Fokussierlinse FO als Teil des optischen Systems kann vorteilhafterweise ohne Entfernen der Verbindungseinheit durch die die Strahlachse SA umgebenden Öffnungen von Verbindungseinheit und Abdichthaube von dem Gerätekopf lösbar und austauschbar oder verstellbar sein, um unterschiedliche Brennweiten des optischen Systems entsprechend unterschiedlich hohen Abdichthauben zu realisieren.

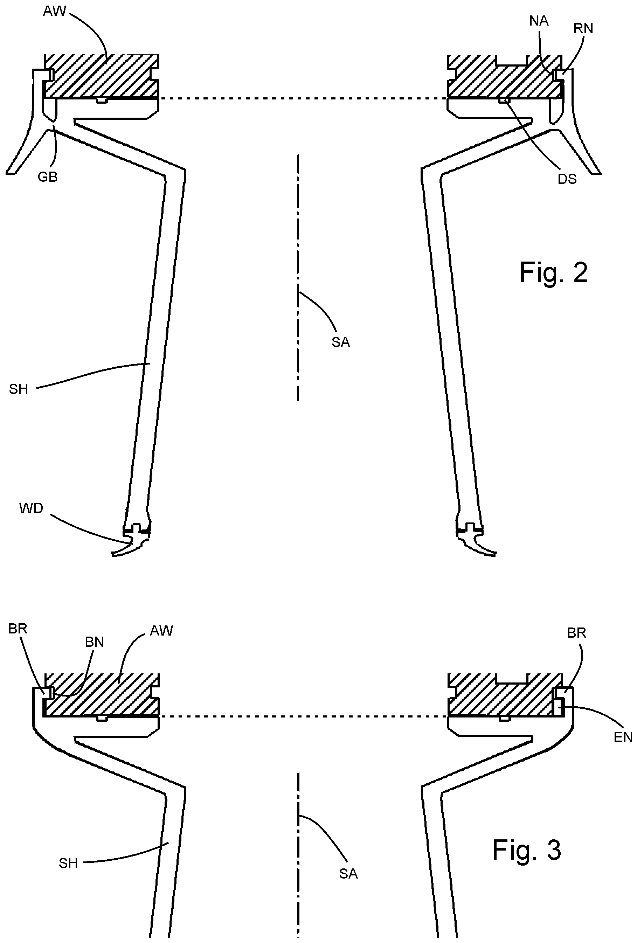

Fig. 2 zeigt eine Abdichthaube SH, welche in der Zeichenebene schmaler ausgeführt ist als die Abdichthaube AH nach Fig. 1 und in zur Abdichthaube AH entsprechender Weise lösbar mit in die Vertiefungen NA eingreifenden Rastnocken RN an dem zweiten Abschnitt AW des Verbindungskörpers gehalten ist.

Fig. 3 zeigt eine alternative Befestigungsart zwischen Abdichthaube SH und zweitem Abschnitt AW. Hierbei sind anstelle der elastisch verschwenkbaren Rastnocken RN an der Abdichthaube SH feststehende Nocken BR vorgesehen, welche in Bajonettnuten BN an der Außenseite des zweiten Abschnitts AW eingreifen. In der linken Hälfte der Fig. 3 ist ein Nocken BR in axial sichernder Position in der Bajonettnut BN dargestellt. Die rechte Hälfte der Fig. 3 zeigt eine axial verlaufende Einführungsnut EN, durch welche die Nocken BR zum Lösen oder Befestigen der Abdichthaube SH an dem zweiten Abschnitt AW axial verschoben werden können. So wird zum Aufsetzen der Abdichthaube SH diese mit den Nocken BR axial durch die Nuten EN auf den zweiten Abschnitt AW aufgesteckt und durch Verdrehen um die Strahlachse SA relativ zu den Nuten EN verschoben und dadurch in eine Drehstellung entsprechend der linken Hälfte der Fig. 3 mit axialer Sperrung der Verbindung verlagert. Durch Endstellungen einer solchen Verdrehbarkeit einer Befestigung nach Art eines Bajonettverschlusses sind definierte Drehpositionen der Abdichthaube SH bei der Durchführung des Bearbeitungsvorgangs gegeben.

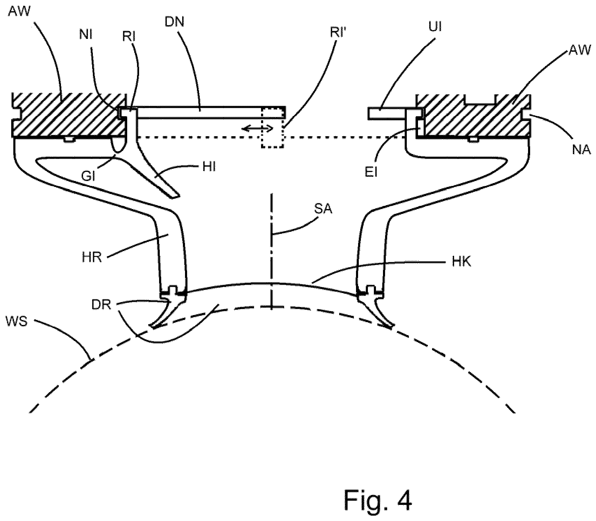

Fig. 4 zeigt eine weitere Ausführungsform einer Abdichthaube, welche in diesem Beispielsfall in dem Innenraum zu weisende Vertiefungen NI an dem zweiten Abschnitt AW gehalten ist. Dabei sind in der linken und der rechten Hälfte der Fig. 4 unterschiedliche Befestigungsarten der bereits besprochenen Art dargestellt. In der linken Hälfte der Fig. 4 greift ein Nocken RI, welcher über einen Handhebel HI um einen Gelenkbereich GI verschwenkbar ist, in die Vertiefung NI ein. Der Handhebel HI ist nur bei vom Werkstück abgehobener Abdichthaube HR zum Lösen der Rastverbindung zugänglich.

In der rechten Hälfte der Fig. 4 ist als Befestigungsform wieder ein Bajonettverschluß angedeutet, bei welchem die Abdichthaube HR in der dargestellten Drehstellung um die Strahlachse SA mit einem an der Abdichthaube HR feststehenden Nocken BI durch eine axiale Nut EI an der Innenwand des Abschnitts AW in die dargestellte Position aufsteckbar und anschließend um die Strahlachse SA in einen Nutenabschnitt UI verdrehbar ist.

Sowohl bei der Verbindung über verschwenkbare Handhebel als auch bei Bajonettverbindungen kann vorteilhafterweise vorgesehen sein, dass die Vertiefungen DN, UI, in welche die jeweiligen Nocken eingreifen, sich in Umfangsrichtung über einen vorgegebenen Winkel, beispielsweise ca. 90° erstrecken und die Abdichthaube mit innerhalb dieser Umfangsnut geführten Nocken um die Strahlachse SA zwischen zwei durch die Umfangsnuten bestimmten Endstellungen verdrehbar ist. Für die Verdrehung der Befestigungsart gemäß der linken Hälfte der Fig. 4 ist zur Veranschaulichung der Verdrehbarkeit mit unterbrochener Linie der Nocken in einer zweiten Endstellung mit RI' bezeichnet dargestellt. Hierdurch können vorteilhafterweise unterschiedliche Drehpositionen der Abdichthaube und deren dem Werkstück zuweisender Anlagekante relativ zum Gerätekopf realisiert und hierdurch eventuell besondere Gegebenheiten bei der Zugänglichkeit der Werkstückoberfläche vorteilhaft berücksichtigt werden. Durch die Endstellungen der Verdrehbarkeit innerhalb der Nuten DN, UI sind definierte Arbeitsstellungen vorgegeben, so dass eine definierte Ausrichtung des erzeugten Musters auf der Oberfläche in beiden Endstellungen gewährleistet und beispielsweise durch Hinterlegung von diesen Endstellungen entsprechenden unterschiedlichen Steuerprogrammen für steuerbare Elemente des optischen Systems berücksichtigt werden können. Bei der Bajonettverbindung kann die Axialnut EI günstigerweise zwischen den beiden Endstellungen der Verdrehbarkeit liegen.

In Fig. 4 ist als weiteres Abwandlungsmerkmal dargestellt, dass die Werkstückoberfläche WS gekrümmt ausgeführt ist und der Verlauf der dem Werkstück zuweisenden Anlagekante HK der Abdichthaube HR bzw. der Verlauf der weichelastischen Ringdichtung DR an die nicht ebene Form der Werkstückoberfläche WS angepaßt ist. Insbesondere kann beispielsweise ein Werkstück rohrförmig ausgebildet sein und die Anlagekante HK und die an dieser angeordnete Ringdichtung DR weisen dann in einer Projektionsrichtung, in Fig. 4 senkrecht zur Zeichenebene, einen konkaven Einzug auf. Der Querschnitt der Abdichthaube in einer Querschnittsebene senkrecht zur Strahlachse ist weitgehend beliebig und kann insbesondere rechteckig oder rund sein

Die einzelnen Gestaltungsfreiheiten, insbesondere der Art der Befestigung und der Ausformung der Abdichthaube können auch in anderen Kombinationen realisiert sein. Die bei der Befestigung ineinander greifenden Strukturen von beispielsweise Nocken und Vertiefungen können zwischen Abdichthaube und Verbindungseinheit auch vertauscht sein.

## Patentansprüche

1. Laserbearbeitungsgerät, welches zur Bearbeitung der Oberfläche eines Werkstücks mittels eines Laserstrahls ausgebildet ist, mit
- optischen Elementen (KS, FL) zur Fokussierung und/oder Schwenkung eines Laserstrahls enthaltenden Gerätekopf (GK),
- einer Abdichthaube (AH), welche an dem Gerätekopf (GK) gehalten und mit einer umlaufenden Anlagekante an die Wertestückoberfläche (WO) anlegbar ist,
- einer Sicherheitsschaltereinrichtung (SS), welche durch Andrücken der Abdichthaube an die Werkstückoberfläche (WO) betätigbar ist,
**gekennzeichnet durch** eine Gasabführeinrichtung (AA, AK, KA, SC), welche zur Abführung von Gas aus der Abdichthaube ausgebildet ist,
wobei zwischen Gerätekopf (GK) und Abdichthaube (AH) eine Verbindungseinheit (VE) angeordnet ist, welche die Sicherheitsschaltereinrichtungen (SS) und zumindest einen Teil der Gasabführeinrichtung (AA, AK, KA) enthält, und wobei die Abdichthaube (AH) von der Verbindungseinheit (VE) lösbar ist.

2. Gerät nach Anspruch 1, **dadurch gekennzeichnet, dass** an der Anlagekante der Abdichthaube (AH) eine gummielastische Dichtung (WD) angeordnet ist.

3. Gerät nach Anspruch 1 oder 2, **dadurch gekennzeichnet, dass** die Abdichthaube relativ zur Verbindungseinheit (VE) um die Strahlachse (SA) des Laserstrahls verdrehbar ist.

4. Gerät nach Anspruch 3, **dadurch gekennzeichnet, dass** die Verdrehbarkeit durch mechanische Anschläge auf einen Winkel von 90° begrenzt ist.

5. Gerät nach einem der Ansprüche 1 bis 4, **dadurch gekennzeichnet, dass** die Abdichthaube (AH) werkzeuglos manuell von der Verbindungseinheit (VE) lösbar und mit dieser verbindbar ist.

6. Gerät nach einem der Ansprüche 1 bis 5, **dadurch gekennzeichnet, dass** die Verbindungseinheit (VE) in einen ersten, dem Gerätekopf (GK) zugewandten Abschnitt (AG) und in einen zweiten, dem Gerätekopf (GK) abgewandten Abschnitt (AW) unterteilt ist und die Abdichthaube (AH) an dem zweiten Abschnitt (AW) gehalten ist.

7. Gerät nach Anspruch 6, **dadurch gekennzeichnet, dass** erster und zweiter Abschnitt (AG, AW) in Strahlrichtung durch Andrücken der Anlagekante gegen die Werkstückoberfläche (WO) entgegen einer Rückstellkraft relativ zueinander verschiebbar sind.

8. Gerät nach Anspruch 7, **dadurch gekennzeichnet, dass** die Relativverschiebung (FK) die Betätigung der Sicherheitsschaltereinrichtung (SS) bewirkt.

9. Gerät nach Anspruch 7 oder 8, **dadurch gekennzeichnet, dass** eine Fuge zwischen dem ersten (AG) und dem zweiten (AW) Abschnitt durch ein flexibles Koppelelement (FB) überbrückt ist.

10. Gerät nach Anspruch 9, **dadurch gekennzeichnet, dass** das flexible Element (FB) die Strahlachse (SA) des Laserstrahls ringförmig umgibt und axial zwischen erstem und zweitem Abschnitt (AG, AW) eine gasdichte radiale Abdichtung bildet.

11. Gerät nach Anspruch 9 oder 10, **dadurch gekennzeichnet, dass** das flexible Element (FB) einteilig mit dem ersten (AG) und dem zweiten (AW) Abschnitt ausgebildet ist.

12. Gerät nach einem der Ansprüche 9 bis 11, **dadurch gekennzeichnet, dass** das flexible Element (FB) die Rückstellkraft gegen die Relativverschiebung (FK) zwischen erstem (AG) und zweitem (AW) Abschnitt bewirkt.

13. Gerät nach einem der Ansprüche 6 bis 12, **dadurch gekennzeichnet, dass** beide Abschnitte (AG, AW) um den Laserstrahl gegeneinander unverdrehbar sind.

14. Gerät nach einem der Ansprüche 1 bis 13, **dadurch gekennzeichnet, dass** radial dem Laserstrahl zuweisend Gasaustrittsöffnungen (AA) für einen Abgasstrom (AR) und von diesen stromabwärts Gasabführleitungen (AK, KA) durch die Verbindungseinheit ausgebildet sind.

15. Gerät nach einem der Ansprüche 1 bis 14, **dadurch gekennzeichnet, dass** ein Zustrom (ZL) von Gas in die Abdichthaube über eine Düse (ZD) erfolgt, welche den Zustrom (ZL) auf eine dem Werkstück zuweisende Fläche (FO) des optischen Systems (FL) richtet.

16. Gerät nach Anspruch 15, **dadurch gekennzeichnet, dass** die Düse (ZD) in der Verbindungseinheit (VE) ausgebildet ist.

17. Gerät nach einem der Ansprüche 1 bis 16, **dadurch gekennzeichnet, dass** die Verbindungseinheit (VE) in Richtung der Strahlachse (SA) relativ zum Gerätekopf (GK) verlagerbar ist.

18. Gerät nach einem der Ansprüche 1 bis 17, **dadurch gekennzeichnet, dass** zumindest Teile (FL) des optischen Systems in Strahlrichtung des Laserstrahls durch die Verbindungseinheit hindurch verstellbar oder entnehmbar und einsetzbar sind.

## Claims

1. Laser processing device, which is designed to process the surface of a workpiece by means of a laser beam, comprising
- optical elements (KS, FL) for focusing and/or swivelling a device head (GK) containing a laser beam,
- a sealing bonnet (AH), which is held on the device head (GK) and can be placed with its peripheral contact edge on the workpiece surface (WO),
- a safety switch device (SS), which can be actuated by pressing the sealing bonnet onto the workpiece surface (WO),
**characterized by** a gas removal device (AA, AK, KA, SC), which is designed to remove gas from the sealing bonnet,
wherein a connecting unit (VE), which contains the safety switch devices (SS) and at least part of the gas removal device (AA, AK, KA), is arranged between device head (GK) and sealing bonnet (AH), and wherein the sealing bonnet (AH) is detachable from the connecting unit (VE).

2. Device according to Claim 1, **characterized in that** a rubber-elastic seal (WD) is arranged on the contact edge of the sealing bonnet (AH).

3. Device according to Claim 1 or 2, **characterized in that** the sealing bonnet is rotatable relative to the connecting unit (VE) about the beam axis (SA) of the laser beam.

4. Device according to Claim 3, **characterized in that** the rotatability is limited by mechanical stops to an angle of 90°.

5. Device according to one of Claims 1 to 4, **characterized in that** the sealing bonnet (AH) can be detached manually from the connecting unit (VE) and connected to the latter without tools.

6. Device according to one of Claims 1 to 5, **characterized in that** the connecting unit (VE) is subdivided into first section (AG) facing the device head (GK) and into second section (AW) facing away from the device head (GK), and the sealing bonnet (AH) is held on the second section (AW) .

7. Device according to Claim 6, **characterized in that** first and second sections (AG, AW) can be displaced relative to each other in the beam direction, counter to a restoring force, by pressing the contact edge against the workpiece surface (WO).

8. Device according to Claim 7, **characterized in that** the relative displacement (FK) effects the actuation of the safety switch device (SS).

9. Device according to Claim 7 or 8, **characterized in that** a joint between the first (AG) and the second (AW) section is bridged by a flexible coupling element (FB).

10. Device according to Claim 9, **characterized in that** the flexible element (FB) surrounds the beam axis (SA) of the laser beam annularly and forms a gas-tight radial seal between the first and second sections (AG, AW).

11. Device according to Claim 9 or 10, **characterized in that** the flexible element (FB) is formed in one piece with the first (AG) and the second (AW) section.

12. Device according to one of Claims 9 to 11, **characterized in that** the flexible element (FB) effects the restoring force counter to the relative displacement (FK) between the first (AG) and second (AW) section.

13. Device according to one of Claims 6 to 12, **characterized in that** the two sections (AG, AW) are non-rotatable with respect to each other about the laser beam.

14. Device according to one of Claims 1 to 13, **characterized in that** gas outlet openings (AA) pointing radially towards the laser beam for a waste gas stream (AR), and gas removal lines (AK, KA) downstream of the latter are formed by the connecting unit.

15. Device according to one of Claims 1 to 14, **characterized in that** a feed stream (ZL) of gas into the sealing bonnet is provided via a nozzle (ZD), which directs the feed stream (ZL) onto an area (FO) of the optical system (FL) that points towards the workpiece.

16. Device according to Claim 15, **characterized in that** the nozzle (ZD) is formed in the connecting unit (VE).

17. Device according to one of Claims 1 to 16, **characterized in that** the connecting unit (VE) can be displaced relative to the device head (GK) in the direction of the beam axis (SA).

18. Device according to one of Claims 1 to 17, **characterized in that** at least parts (FL) of the optical system can be displaced or removed and inserted through the connecting unit in the beam direction of the laser beam.

## Revendications

1. Appareil de traitement laser, qui est constitué pour le traitement de la surface d'une pièce au moyen d'un rayon laser, avec
- des éléments optiques (KS, FL) destinés à la focalisation et/ou au pivotement d'une tête d'appareil (GK) contenant un rayon laser,
- un capot d'étanchéité (AH) qui est retenu sur la tête d'appareil (GK) et qui peut être appliqué sur la surface de pièce (WO) par une arête d'appui périphérique,
- un dispositif de commutateur de sécurité (SS) qui peut être actionné par la pression du capot d'étanchéité sur la surface de pièce (WO),
**caractérisé par** un dispositif d'évacuation de gaz (AA, AK, KA, SC) qui est constitué pour l'évacuation de gaz à partir du capot d'étanchéité,
une unité de raccordement (VE) étant disposée entre la tête d'appareil (GK) et le capot d'étanchéité (AH), laquelle contient les dispositifs de commutateur de sécurité (SS) et au moins une partie du dispositif d'évacuation de gaz (AA, AK, KA), et en ce que le capot d'étanchéité (AH) peut être détaché de l'unité de raccordement (VE).

2. Appareil selon la revendication 1, **caractérisé en ce qu'**un joint d'étanchéité (WD) élastique comme du caoutchouc est disposé sur l'arête d'appui du capot d'étanchéité (AH).

3. Appareil selon la revendication 1 ou 2, **caractérisé en ce que** le capot d'étanchéité peut tourner autour de l'axe de rayon (SA) du rayon laser relativement à l'unité de raccordement (VE).

4. Appareil selon la revendication 3, **caractérisé en ce que** l'aptitude à la rotation est limitée à un angle de 90° par des butées mécaniques.

5. Appareil selon l'une des revendications 1 à 4, **caractérisé en ce que**, sans outil, manuellement, le capot d'étanchéité (AH) peut être détaché de l'unité de raccordement (VE) et peut lui être raccordé.

6. Appareil selon l'une des revendications 1 à 5, **caractérisé en ce que** l'unité de raccordement (VE) est divisée en premier tronçon (AG) tourné vers la tête d'appareil (GK) et en deuxième tronçon (AW) éloigné de la tête d'appareil (GK), et le capot d'étanchéité (AH) est retenu sur le deuxième tronçon (AW).

7. Appareil selon la revendication 6, **caractérisé en ce que** le premier et le deuxième tronçon (AG, AW) peuvent être déplacés l'un par rapport à l'autre dans la direction du rayon par une pression exercée par l'arête d'appui contre la surface de pièce (WO) à l'encontre d'une force de rappel.

8. Appareil selon la revendication 7, **caractérisé en ce que** le déplacement relatif (FK) provoque l'actionnement du dispositif de commutateur de sécurité (SS).

9. Appareil selon la revendication 7 ou 8, **caractérisé en ce qu'**une fente de séparation entre le premier tronçon (AG) et le deuxième tronçon (AW) est enjambée par un élément d'accouplement (FB) flexible.

10. Appareil selon la revendication 9, **caractérisé en ce que** l'élément flexible (FB) entoure de façon annulaire l'axe de rayon (SA) du rayon laser et forme une étanchéité radiale étanche au gaz axialement entre le premier et le deuxième tronçon (AG, AW).

11. Appareil selon la revendication 9 ou 10, **caractérisé en ce que** l'élément flexible (FB) est constitué en une seule partie avec le premier tronçon (AG) et le deuxième tronçon (AW).

12. Appareil selon l'une des revendications 9 à 11, **caractérisé en ce que** l'élément flexible (FB) provoque la force de rappel contre le déplacement relatif (FK) entre le premier tronçon (AG) et le deuxième tronçon (AW) .

13. Appareil selon l'une des revendications 6 à 12, **caractérisé en ce que** les deux tronçons (AG, AW) ne peuvent pas tourner l'un par rapport à l'autre autour du rayon laser.

14. Appareil selon l'une des revendications 1 à 13, **caractérisé en ce que** des ouvertures de sortie de gaz (AA) pour un flux de gaz d'échappement (AR) dirigées radialement vers le rayon laser et des conduites d'évacuation de gaz (AK, KA) en aval de ces ouvertures sont constituées à travers l'unité de raccordement.

15. Appareil selon l'une des revendications 1 à 14, **caractérisé en ce qu'**un afflux (ZL) de gaz dans le capot d'étanchéité s'effectue par le biais d'une buse (ZD) qui dirige l'afflux (ZL) vers une surface (FO) du système optique (FL) dirigée vers la pièce.

16. Appareil selon la revendication 15, **caractérisé en ce que** la buse (ZD) est constituée dans l'unité de raccordement (VE).

17. Appareil selon l'une des revendications 1 à 16, **caractérisé en ce que** l'unité de raccordement (VE) est déplaçable dans la direction de l'axe de rayon (SA) relativement à la tête d'appareil (GK).

18. Appareil selon l'une des revendications 1 à 17, **caractérisé en ce qu'**au moins des parties (FL) du système optique sont réglables ou amovibles ou insérables dans la direction de rayon du rayon laser à travers l'unité de raccordement.
